# EUROPÄISCHE PATENTSCHRIFT

(11) **EP 3 465 658 B1**
(45) Veröffentlichungstag und Bekanntmachung des Hinweises auf die Patenterteilung: **10.06.2020**
(21) Anmeldenummer: 17716539.6
(22) Anmeldetag: 11.04.2017
(51) Int. Cl.: G08G 1/16, G01S 13/93

(54) **VERFAHREN ZUM BEREITSTELLEN EINER INFORMATION BEZÜGLICH EINES FUSSGÄNGERS IN EINEM UMFELD EINES FAHRZEUGS UND VERFAHREN ZUM STEUERN EINES FAHRZEUGS**
METHOD FOR PROVIDING INFORMATION REGARDING A PEDESTRIAN IN AN ENVIRONMENT OF A VEHICLE AND METHOD FOR CONTROLLING A VEHICLE
PROCÉDÉ POUR FOURNIR UNE INFORMATION RELATIVE À UN PIÉTON DANS UN ENVIRONNEMENT D'UN VÉHICULE ET PROCÉDÉ POUR COMMANDER UN VÉHICULE

(30) Priorität: 01.06.2016 DE 102016209556
(43) Veröffentlichungstag der Anmeldung: 10.04.2019
(73) Patentinhaber: Robert Bosch GmbH, 70442 Stuttgart (DE)
(72) Erfinder: EWERT, Marlon Ramon, 74199 Untergruppenbach (DE)
(86) Internationale Anmeldenummer: PCT/EP2017/058612
(87) Internationale Veröffentlichungsnummer: WO 2017/207153

(56) Entgegenhaltungen:
- DE-A1-102006 005 021
- DE-A1-102010 015 686

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Ein Verfahren zum Bereitstellen einer Information in einem Umfeld eines Fahrzeugs mittels Einlesen eines Umfeldsensorsignals, das ein von einem Umfeldsensor des Fahrzeugs erzeugtes Signal repräsentiert, dem Erzeugen einer Information unter Verwendung des Umfeldsensorsignals und dem anschließenden Senden der Information an eine Kommunikationsschnittstelle eines weiteren Fahrzeugs ist beispielsweise aus dem Dokument DE 10 2010 015686 bekannt.

Moderne Fahrzeuge können mit Systemen zur Vermeidung von Kollisionen mit Fußgängern ausgestattet sein.

### Offenbarung der Erfindung

Vor diesem Hintergrund werden mit dem hier vorgestellten Ansatz ein Verfahren zum Bereitstellen einer Information bezüglich eines Fußgängers in einem Umfeld eines Fahrzeugs, ein Verfahren zum Steuern eines Fahrzeugs unter Verwendung einer von zumindest einem weiteren Fahrzeug bereitgestellten Information bezüglich eines Fußgängers in einem Umfeld des weiteren Fahrzeugs, weiterhin ein Steuergerät, das je eines dieser Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz beruht auf der Erkenntnis, dass mithilfe von Car-to-Car- oder Car-to-Infrastructure-Kommunikation Daten bezüglich eines Fußgängers zwischen mehreren Fahrzeugen, die sich in der Nähe des Fußgängers befinden, ausgetauscht werden können. Beispielsweise kann ein Fahrzeug durch ein weiteres Fahrzeug über den Fußgänger informiert werden, noch bevor ein Fahrer des Fahrzeugs den Fußgänger sehen kann oder dieser durch einen Umfeldsensor des Fahrzeugs erfasst werden kann. Durch eine derartige kooperative Ortung von Fußgängern über mehrere Fahrzeuge mithilfe von in den Fahrzeugen verbauten Umfeldsensoren können Kollisionen zwischen Fußgängern und Fahrzeugen vermieden werden.

Der beschriebene Ansatz ist vorteilhaft im Vergleich zu einer Fußgängerortung in einem Fahrzeug, die rein basierend auf Umfeldsensoren von genau diesem Fahrzeug durchgeführt wird, was bedeutet, dass jedes Fahrzeug, das an einem Fußgänger vorbeifährt, diesen mithilfe der eigenen Umfeldsensoren erkennen sollte. Dies gelingt in der Praxis jedoch nicht immer, da die Umfeldsensoren der Fahrzeuge unterschiedliche Detektionsleistungen aufweisen können und auch nicht alle Fahrzeuge über derartige Umfeldsensoren verfügen. Mittels eines Verfahrens zur Erkennung von Fußgängern über mehrere Fahrzeuge hinweg mithilfe von Car-to-Car-Kommunikation, wie es der Gegenstand des hier vorgestellten Ansatzes ist, kann dennoch eine zuverlässige Erkennung von Fußgängern gewährleistet werden. Dadurch können schwerwiegende Unfälle verhindert werden.

Es wird ein Verfahren zum Bereitstellen einer Information bezüglich eines Fußgängers in einem Umfeld eines Fahrzeugs vorgestellt, wobei das Verfahren folgende Schritte umfasst:
Einlesen eines Umfeldsensorsignals, das ein von einem Umfeldsensor des Fahrzeugs erzeugtes Signal repräsentiert;
Erzeugen einer den Fußgänger repräsentierenden Fußgängerinformation unter Verwendung des Umfeldsensorsignals; und
Senden der Fußgängerinformation an eine Kommunikationsschnittstelle zu zumindest einem weiteren Fahrzeug, um die Fußgängerinformation dem weiteren Fahrzeug bereitzustellen.

Unter einem Umfeldsensor kann beispielsweise eine Kamera oder ein Radar-, Ultraschall- oder Lasersensor zum Erfassen eines Umfelds des Fahrzeugs verstanden werden. Die Fußgängerinformation kann in Form eines drahtlos zu übertragenden Signals ausgesendet werden. Bei der Fußgängerinformation kann es sich um eine Information über eine Position oder eine Geschwindigkeit des Fußgängers handeln. Beispielsweise kann die Position oder die Geschwindigkeit auch anhand von GPS-Daten ermittelt werden. Unter einer Kommunikationsschnittstelle kann eine fahrzeuginterne oder fahrzeugexterne Sende- oder Empfangseinheit zum insbesondere drahtlosen Senden oder Empfangen von Daten zwischen dem Fahrzeug und dem weiteren Fahrzeug verstanden werden. Beispielsweise kann die Kommunikationsschnittstelle als Komponente eines Steuergeräts des Fahrzeugs realisiert sein. Die Kommunikationsschnittstelle kann jedoch auch Teil einer Infrastruktur, etwa einer Lichtzeichenanlage, sein. Je nach Ausführungsform können das Fahrzeug und das weitere Fahrzeug direkt oder indirekt miteinander verbunden oder verbindbar sein, um Daten miteinander auszutauschen. Ein direkter Datenaustausch kann auch als Car-to-Car-Kommunikation bezeichnet werden. Ein indirekter Datenaustausch, etwa mithilfe zusätzlicher Infrastruktureinrichtungen, kann auch als Car-to-Infrastructure-Kommunikation bezeichnet werden.

Gemäß einer Ausführungsform kann im Schritt des Erzeugens eine eine relative Position des Fußgängers relativ zum Fahrzeug, eine absolute Position des Fußgängers, eine Relativgeschwindigkeit des Fußgängers relativ zum Fahrzeug oder einen Kollisionszeitpunkt einer Kollision zwischen dem Fußgänger und dem Fahrzeug repräsentierende Information als die Fußgängerinformation erzeugt werden. Unter einer absoluten Position kann beispielsweise eine Position des Fußgängers innerhalb eines GPS-Koordinatensystems verstanden werden. Unter einem Kollisionszeitpunkt kann ein Zeitpunkt verstanden werden, zu dem der Fußgänger und das Fahrzeug voraussichtlich miteinander kollidieren würden. Der Kollisionszeitpunkt kann auch eine Zeitspanne bis zur Kollision, auch time to impact oder kurz TTI genannt, repräsentieren. Durch diese Ausführungsform kann der Fußgänger zuverlässig und genau erfasst werden.

Gemäß einer weiteren Ausführungsform kann im Schritt des Sendens ferner eine das Fahrzeug repräsentierende Fahrzeugidentifikationsinformation oder eine Signalinformation, die einen Zeitstempel, eine Signalstärke oder eine Signalgüte eines Sendesignals zum Senden der Fußgängerinformation repräsentiert, an die Kommunikationsschnittstelle gesendet werden. Unter einer Fahrzeugidentifikationsinformation kann eine Information zum eindeutigen Identifizieren des Fahrzeugs verstanden werden. Dadurch können dem weiteren Fahrzeug zusätzliche sicherheitsrelevante Informationen über die Kommunikationsschnittstelle bereitgestellt werden.

Es ist vorteilhaft, wenn im Schritt des Einlesens ferner eine Abstandsinformation, die einen Abstand zwischen dem Fahrzeug und dem weiteren Fahrzeug oder einen Abstand zwischen dem Fußgänger und dem weiteren Fahrzeug repräsentiert, eingelesen wird. Im Schritt des Sendens kann die Fußgängerinformation unter Verwendung der Abstandsinformation gesendet werden. Beispielsweise kann im Schritt des Sendens die Fußgängerinformation gesendet werden, wenn die Abstandsinformation anzeigt, dass sich das weitere Fahrzeug innerhalb eines vorgegebenen Mindestabstands zu dem Fußgänger befindet. Dadurch kann sichergestellt werden, dass die Fußgängerinformation an Fahrzeuge gesendet wird, die sich in der Nähe des Fußgängers befinden. Somit kann die Effizienz des Verfahrens verbessert werden.

Das Verfahren kann zudem einen Schritt des Ermittelns der Abstandsinformation in Abhängigkeit von einer der Kommunikationsschnittstelle zugeordneten Kommunikationsgüte umfassen. Dadurch wird eine zuverlässige und genaue Ermittlung der Abstandsinformation ermöglicht.

Des Weiteren schafft der hier beschriebene Ansatz ein Verfahren zum Steuern eines Fahrzeugs unter Verwendung einer von zumindest einem weiteren Fahrzeug bereitgestellten Information bezüglich eines Fußgängers in einem Umfeld des weiteren Fahrzeugs, wobei das Verfahren folgende Schritte umfasst:
Einlesen einer den Fußgänger repräsentierenden Fußgängerinformation über eine Kommunikationsschnittstelle zu dem weiteren Fahrzeug; und
Erzeugen eines Steuersignals zum Steuern des Fahrzeugs unter Verwendung der Fußgängerinformation.

Beispielsweise ist es mittels eines derartigen Verfahrens möglich, Informationen über einen von dem weiteren Fahrzeug detektierten Fußgänger mit vorausschauenden Systemen des Fahrzeugs zu kombinieren, wodurch Ausweichmanöver vorausschauend geplant und durchgeführt werden können, insbesondere wenn Fußgänger für die im Fahrzeug verbaute Umfeldsensorik nicht sichtbar sind. Somit können Brems- oder Ausweichmanöver rechtzeitig durchgeführt oder Fußgängerschutzalgorithmusschwellen rechtzeitig angepasst werden. Idealerweise können dadurch Kollisionen mit Fußgängern verhindert werden. Kommt es dennoch zu einer Kollision, so kann der Fußgänger mithilfe des hier beschriebenen Ansatzes vor schweren Verletzungen geschützt werden, da Fußgängerschutzrückhaltemittel entsprechend frühzeitig gezündet werden können.

Vorteilhafterweise kann es sich bei der eingelesenen Fußgängerinformation um eine gemäß dem genannten Verfahren zum Bereitstellen einer Information bezüglich eines Fußgängers in einem Umfeld eines Fahrzeugs bereitgestellte Information handeln.

Somit kann im Schritt des Einlesens gemäß einer Ausführungsform eine eine relative Position des Fußgängers relativ zum weiteren Fahrzeug, eine absolute Position des Fußgängers, eine Relativgeschwindigkeit des Fußgängers relativ zum weiteren Fahrzeug oder einen Kollisionszeitpunkt einer Kollision zwischen dem Fußgänger und dem weiteren Fahrzeug repräsentierende Information als die Fußgängerinformation eingelesen werden. Durch diese Ausführungsform wird eine effiziente und präzise Steuerung des Fahrzeugs in Abhängigkeit von der Fußgängerinformation ermöglicht.

Gemäß einer weiteren Ausführungsform kann im Schritt des Einlesens ferner eine das weitere Fahrzeug repräsentierende Fahrzeugidentifikationsinformation oder eine Signalinformation, die einen Zeitstempel, eine Signalstärke oder eine Signalgüte eines Sendesignals zum Senden der Fußgängerinformation repräsentiert, eingelesen werden. Dementsprechend kann im Schritt des Erzeugens das Steuersignal ferner unter Verwendung der Fahrzeugidentifikationsinformation oder der Signalinformation erzeugt werden. Dadurch können Fehler beim Erzeugen des Steuersignals vermieden werden.

Von Vorteil ist auch, wenn im Schritt des Einlesens ferner ein von einem Umfeldsensor des Fahrzeugs erzeugtes Umfeldsensorsignal eingelesen wird. Hierbei kann in einem Schritt des Plausibilisierens das Umfeldsensorsignal unter Verwendung der Fußgängerinformation plausibilisiert werden, um ein plausibilisiertes Umfeldsensorsignal zu erhalten. Beispielsweise kann im Schritt des Plausibilisierens das Umfeldsensorsignal durch Bilden eines Mittelwerts oder eines Medians aus einer durch das Umfeldsensorsignal repräsentierten Position oder Geschwindigkeit des Fußgängers und einer durch die Fußgängerinformation repräsentierten Position oder Geschwindigkeit des Fußgängers plausibilisiert werden. Im Schritt des Erzeugens kann das Steuersignal unter Verwendung des plausibilisierten Umfeldsensorsignals erzeugt werden. Dadurch können die Erkennungsgenauigkeit und die Robustheit des Verfahrens erhöht werden.

Gemäß einer weiteren Ausführungsform kann im Schritt des Erzeugens das Steuersignal erzeugt werden, um eine Trajektorie oder eine Geschwindigkeit des Fahrzeugs zu ändern. Zusätzlich oder alternativ kann das Steuersignal erzeugt werden, um zumindest einen Schwellenwert zum Aktivieren einer Personenschutzeinrichtung des Fahrzeugs zu ändern. Unter einer Personenschutzeinrichtung kann beispielsweise ein Airbag, ein Gurtstraffer oder eine Fußgängerschutzeinrichtung, etwa in Form einer aufstellbaren Motorhaube oder eines Fußgängerairbags, verstanden werden. Durch diese Ausführungsform kann eine Kollision zwischen dem Fußgänger und dem Fahrzeug wirksam verhindert oder zumindest abgemildert werden.

Des Weiteren kann in einem optionalen Schritt die Fußgängerinformation als Warnsignal ausgegeben werden. Unter einem Warnsignal kann ein akustisches oder optisches Signal verstanden werden. Dadurch kann ein Fahrer des Fahrzeugs vor dem Fußgänger gewarnt werden.

Diese Verfahren können beispielsweise in Software oder Hardware oder in einer Mischform aus Software und Hardware, beispielsweise in einem Steuergerät, implementiert sein.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung eines Motorsteuergeräts und/oder eines Lenk- und/oder Bremsaktors des Fahrzeugs. Hierzu kann das Steuergerät beispielsweise auf Sensorsignale wie Beschleunigungs-, Umfeld- oder Lenkwinkelsensorsignale zugreifen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung eines Fahrzeugs mit einem Steuergerät gemäß einem Ausführungsbeispiel;
Fig. 2 eine schematische Darstellung eines Steuergeräts gemäß einem Ausführungsbeispiel;
Fig. 3 eine schematische Darstellung eines weiteren Steuergeräts gemäß einem Ausführungsbeispiel;
Fig. 4 eine schematische Darstellung eines kritischen Abbiegevorgangs;
Fig. 5 eine schematische Darstellung eines kritischen Abbiegevorgangs aus Fig. 4;
Fig. 6 eine schematische Darstellung eines kritischen Abbiegevorgangs aus Fig. 4;
Fig. 7 eine schematische Darstellung eines kritischen Abbiegevorgangs mit einem Fahrzeug und einem weiteren Fahrzeug aus Fig. 1;
Fig. 8 eine schematische Darstellung eines kritischen Abbiegevorgangs aus Fig. 7;
Fig. 9 eine schematische Darstellung eines kritischen Abbiegevorgangs aus Fig. 7;
Fig. 10 eine schematische Darstellung einer Kommunikationsschnittstelle gemäß einem Ausführungsbeispiel;
Fig. 11 ein Ablaufdiagramm eines Verfahrens gemäß einem Ausführungsbeispiel; und
Fig. 12 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

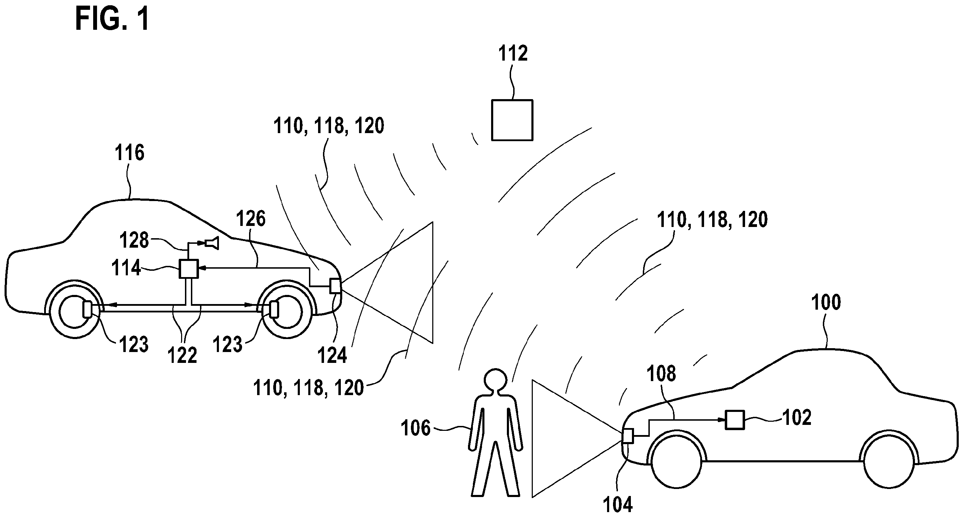

Fig. 1 zeigt eine schematische Darstellung eines Fahrzeugs 100 mit einem Steuergerät 102 gemäß einem Ausführungsbeispiel. Das Steuergerät 102 ist mit einem Umfeldsensor 104 des Fahrzeugs 100 verbunden, der ausgebildet ist, um einen Fußgänger 106 im Umfeld des Fahrzeugs 100 zu erfassen und ein den Fußgänger 106 repräsentierendes Umfeldsensorsignal 108 an das Steuergerät 102 zu senden. Das Steuergerät 102 ist ausgebildet, um unter Verwendung des Umfeldsensorsignals 108 eine Fußgängerinformation 110 zu erzeugen. Die Fußgängerinformation 110 repräsentiert beispielsweise eine Position oder eine Geschwindigkeit des Fußgängers 106. Je nach Ausführungsbeispiel kann die Fußgängerinformation 110 relative oder absolute Werte bezüglich der Position oder der Geschwindigkeit des Fußgängers 106 repräsentieren. Das Steuergerät 102 sendet die Fußgängerinformation 110 an eine Kommunikationsschnittstelle 112, die gemäß diesem Ausführungsbeispiel als eine fahrzeugexterne Sende- und Empfangseinheit realisiert ist. Beispielsweise handelt es sich bei der Kommunikationsschnittstelle 112 um eine in eine Ampel oder eine sonstige Infrastruktureinrichtung integrierte Sende- und Empfangseinheit. Die Kommunikationsschnittstelle 112 ist mit einem weiteren Steuergerät 114 eines weiteren Fahrzeugs 116 verbunden. Das weitere Fahrzeug 116 befindet sich beispielsweise in der Nähe des Fußgängers 106 oder fährt auf den Fußgänger 106 zu. Das weitere Steuergerät 114 ist ausgebildet, um die Fußgängerinformation 110 über die Kommunikationsschnittstelle 112 einzulesen. Die beiden Fahrzeuge 100, 116 sind somit über Car-to-Infrastructure-Kommunikation miteinander vernetzt. Auf diese Weise kann die Fußgängerinformation 110 dem weiteren Fahrzeug 116 zur Verfügung gestellt werden.

Alternativ ist das Steuergerät 102 ausgebildet, um die Fußgängerinformation 110 über Car-to-Car-Kommunikation direkt an das weitere Steuergerät 114 zu senden. Hierzu ist die Kommunikationsschnittstelle 112 etwa als Komponente des Steuergeräts 102 des Fahrzeugs 100 bzw. des weiteren Steuergeräts 114 des weiteren Fahrzeugs 116 realisiert.

Gemäß einem weiteren Ausführungsbeispiel ist das Steuergerät 102 ausgebildet, um zusätzlich zur Fußgängerinformation 110 eine das Fahrzeug 100 repräsentierende Fahrzeugidentifikationsinformation 118 oder auch eine Signalinformation 120, die beispielsweise einen Zeitstempel, eine Signalstärke oder eine Signalgüte eines Sendesignals zum Senden der Fußgängerformationen 110 repräsentiert, über die Kommunikationsschnittstelle 112 bereitzustellen.

Das weitere Steuergerät 114 ist ausgebildet, um unter Verwendung der Fußgängerinformation 110 oder zumindest einer der beiden optionalen Informationen 118, 120 ein Steuersignal 122 zum Steuern des weiteren Fahrzeugs 116 zu erzeugen. Gemäß dem in Fig. 1 gezeigten Ausführungsbeispiel erzeugt das weitere Steuergerät 114 das Steuersignal 122, um eine Bremsanlage 123 des weiteren Fahrzeugs 116 anzusteuern. Je nach Ausführungsbeispiel erzeugt das weitere Steuergerät 114 das Steuersignal 122, um zusätzlich oder alternativ eine Trajektorie oder zumindest einen Schwellenwert zum Auslösen einer Personenschutzeinrichtung des weiteren Fahrzeugs 116 zu ändern.

Das weitere Fahrzeug 116 kann ähnlich wie das Fahrzeug 100 mit einem weiteren Umfeldsensor 124 zum Erfassen eines Umfelds des weiteren Fahrzeugs 116 ausgestattet sein. Hierbei ist der weitere Umfeldsensor 124 ausgebildet, um ein entsprechendes weiteres Umfeldsensorsignal 126 an das weitere Steuergerät 114 zu senden. Das weitere Umfeldsensorsignal 126 kann beispielsweise ebenfalls den Fußgänger 106 repräsentieren, sofern sich der Fußgänger 106 im Erfassungsbereich des weiteren Umfeldsensors 124 befindet. Dementsprechend ist das weitere Steuergerät 114 ausgebildet, um das Steuersignal 122 ferner unter Verwendung des weiteren Umfeldsensorsignals 126 zu erzeugen. Beispielsweise verwendet das weitere Steuergerät 114 die Fußgängerinformation 110, um das weitere Umfeldsensorsignal 126 mittels der Fußgängerinformation 110 zu plausibilisieren.

Gemäß einem weiteren Ausführungsbeispiel ist das weitere Steuergerät 114 ausgebildet, um die Fußgängerinformation 110 als ein Warnsignal 128, hier als ein Warnton, im weiteren Fahrzeug 116 auszugeben.

Unter Car-to-Car-Kommunikation, kurz Car2Car oder C2C, kann der Austausch von Informationen und Daten zwischen Kraftfahrzeugen verstanden werden. Ziel dieses Datenaustauschs ist es, den jeweiligen Fahrer frühzeitig kritische und gefährliche Situationen zu melden. Hierbei können auch fahrzeugspezifische Daten über die Kommunikationsschnittstelle 112 ausgetauscht werden. Beispielsweise sammeln die betreffenden Fahrzeuge Daten über ABS-Eingriffe, Lenkwinkel, Fahrzeugposition, -richtung und -geschwindigkeit und senden diese über Funk, etwa über WLAN oder UMTS, an andere Verkehrsteilnehmer. Somit kann die Sichtweite eines Fahrers mit elektronischen Mitteln vergrößert werden. Unter Car-to-Infrastructure-Kommunikation, kurz C2I, kann der Austausch von Daten zwischen einem Fahrzeug und einer umliegenden Infrastruktur, etwa einer Lichtzeichenanlage, verstanden werden.

Bei den beiden Fahrzeugen 100, 116 kann es sich um hoch- oder teilautomatisierte Fahrzeuge handeln. Hochautomatisierte Fahrzeuge können beispielsweise einen Straßenverlauf, andere Verkehrsteilnehmer oder Hindernisse selbstständig erkennen, entsprechende Steuerbefehle berechnen und diese an entsprechende Aktuatoren im Fahrzeug weiterleiten. Dadurch kann ein Fahrverlauf des Fahrzeugs ohne Eingriffe durch einen Fahrer korrekt beeinflusst werden.

Der Umfeldsensor 104 des Fahrzeugs 100 bzw. der Umfeldsensor 124 des weiteren Fahrzeugs 116 kann beispielsweise in der Fahrzeugfront verbaut sein. Außerdem können in der Fahrzeugfront unter anderem zumindest zwei Beschleunigungssensoren, auch Pedestrian Contact Sensor genannt, verbaut sein. Zusätzlich oder alternativ kann in der Fahrzeugfront auch ein Pressure Tube Sensor verbaut sein. Hierbei kommt es durch einen Aufprall eines Objekts in einem relevanten Bereich des Stoßfängers zu einem Signalanstieg innerhalb der detektierenden Sensorik. Die Amplitude der detektierten Signale ist unter anderem von der Masse und der Geschwindigkeit des auftreffenden Objekts abhängig.

Das Steuergerät 102 bzw. das weitere Steuergerät 114 kann ausgebildet sein, um das Signal der Pedestrian Contact Sensoren und/oder des Pressure Tube Sensors innerhalb von Algorithmen weiterzuverarbeiten, um das Aufprallobjekt unterschiedlichen Objektklassen, insbesondere den Klassen Fußgänger oder Nichtfußgänger, zuzuordnen. Erkennt der Algorithmus, dass es sich beim Aufprallobjekt um einen Fußgänger handelt, so aktiviert das Steuergerät 102 bzw. das weitere Steuergerät 114 in Abhängigkeit von der Fahrzeuggeschwindigkeit beispielsweise aktive Rückhaltemittel, um den Aufprall des Fußgängers 106 auf die Fahrzeugfront abzufedern. Wird dagegen kein Fußgänger erkannt, so werden keine aktiven Rückhaltemittel gezündet.

Um das Aufprallobjekt innerhalb des Algorithmus zu klassifizieren, vergleicht das Steuergerät 102 bzw. das weitere Steuergerät 114 die verarbeiteten Signale, etwa Rohsignale, Fensterintegrale, Integrale oder Ableitungen, beispielsweise mit geeigneten Schwellen. Überschreitet zumindest ein relevantes Signal die Schwellen, so handelt es sich beim Aufprallobjekt höchstwahrscheinlich um einen Fußgänger und die aktiven Rückhaltemittel werden gezündet. Im Rahmen des beschriebenen Ansatzes erfolgt die Zündung der aktiven Rückhaltemittel unter Zuhilfenahme der Signale 108, 126 aus dem jeweils anderen Fahrzeug 100, 116 innerhalb des Steuergeräts 102 bzw. des weiteren Steuergeräts 114 des jeweils eigenen der beiden genannten Fahrzeuge 100, 116.

Insbesondere kann der Umfeldsensor 104 ausgebildet sein, um Objekte, die sich vor dem Fahrzeug 100 befinden, als Fußgänger oder Nichtfußgänger zu erkennen. Darüber hinaus kann der Umfeldsensor 104 einen Time-to-impact-Wert bereitstellen, der eine Zeitspanne bis zu einer voraussichtlichen Kollision zwischen dem Fußgänger 106 und dem Fahrzeug 100 repräsentiert. Mithilfe dieser Größen können Algorithmusschwellen im anderen Fahrzeug 116 je nach erkannter Objektklasse sensibel oder robust eingestellt werden, sodass der Fußgänger bei einem Aufprall auf das Fahrzeug 116 sicher erkannt wird.

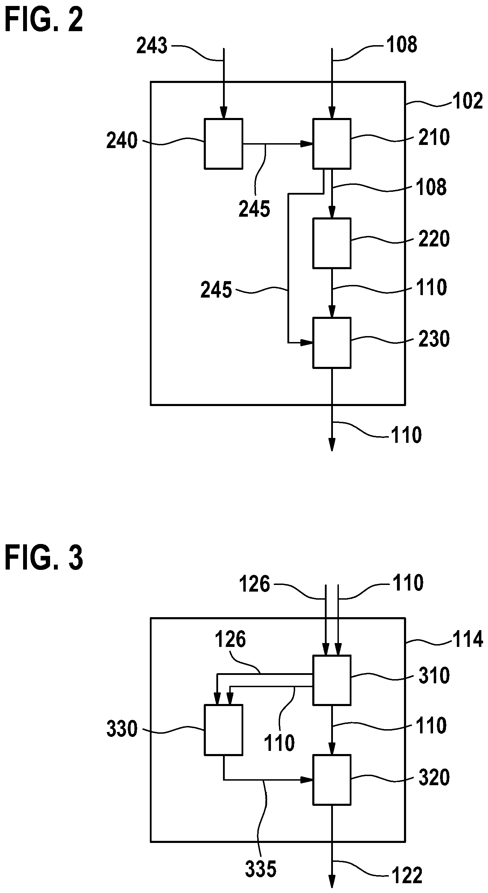

Fig. 2 zeigt eine schematische Darstellung eines Steuergeräts 102 gemäß einem Ausführungsbeispiel, etwa eines Steuergeräts, wie es vorangehend anhand von Fig. 1 beschrieben ist. Das Steuergerät 102 umfasst eine Einleseeinheit 210 zum Einlesen des Umfeldsensorsignals 108. Eine Erzeugungseinheit 220 ist ausgebildet, um unter Verwendung des Umfeldsensorsignals 108 die Fußgängerinformation 110 zu erzeugen. An die Erzeugungseinheit 220 ist eine Sendeeinheit 230 angeschlossen, die ausgebildet ist, um die Fußgängerinformation 110 an die in Fig. 1 gezeigte Kommunikationsschnittstelle 112 und somit an das weitere Fahrzeug zu senden.

Gemäß einem Ausführungsbeispiel umfasst das Steuergerät 102 eine optionale Bestimmungseinheit 240, die ausgebildet ist, um unter Verwendung einer Kommunikationsgüteinformation 243, die eine der Kommunikationsschnittstelle zugeordnete Kommunikationsgüte repräsentiert, einen Abstand zwischen dem Fußgänger und dem weiteren Fahrzeug oder auch einen Abstand zwischen dem Fahrzeug und dem weiteren Fahrzeug zu ermitteln und eine den Abstand repräsentierende Abstandsinformation 245 an die Einleseeinheit 210 zu senden. Die Einleseeinheit 210 leitet die Abstandsinformation 245 an die Sendeeinheit 230 weiter. Die Sendeeinheit 230 ist ausgebildet, um die Fußgängerinformation 110 unter Verwendung der Abstandsinformation 245 an die Kommunikationsschnittstelle zu senden. Beispielsweise sendet die Sendeeinheit 230 die Fußgängerinformation 110 nur dann, wenn sich das weitere Fahrzeug innerhalb eines vorgegebenen Mindestabstands zu dem Fahrzeug oder dem Fußgänger befindet.

Fig. 3 zeigt eine schematische Darstellung eines weiteren Steuergeräts 114 gemäß einem Ausführungsbeispiel, etwa eines weiteren Steuergeräts, wie es vorangehend anhand von Fig. 1 beschrieben ist. Das weitere Steuergerät 114 umfasst eine weitere Einleseeinheit 310 zum Einlesen der Fußgängerinformation 110 über die in Fig. 1 gezeigte Kommunikationsschnittstelle 112 und zum Weiterleiten der Fußgängerinformation 110 an eine weitere Erzeugungseinheit 320. Die weitere Erzeugungseinheit 320 ist ausgebildet, um unter Verwendung der Fußgängerinformation 110 das Steuersignal 122 zu erzeugen.

Gemäß einem Ausführungsbeispiel ist die weitere Einleseeinheit 310 ausgebildet, um zusätzlich zur Fußgängerinformation 110 das weitere Umfeldsensorsignal 126 einzulesen und dieses zusammen mit der Fußgängerinformation 110 an eine optionale Plausibilisierungseinheit 330 weiterzuleiten. Die Plausibilisierungseinheit 330 ist ausgebildet, um das weitere Umfeldsensorsignal 126 unter Verwendung der Fußgängerinformation 110 zu plausibilisieren und ein entsprechend plausibilisiertes Umfeldsensorsignal 335 an die weitere Erzeugungseinheit 320 zu senden. Hierbei erzeugt die weitere Erzeugungseinheit 320 das Steuersignal 122 unter Verwendung des plausibilisierten Umfeldsensorsignals 335.

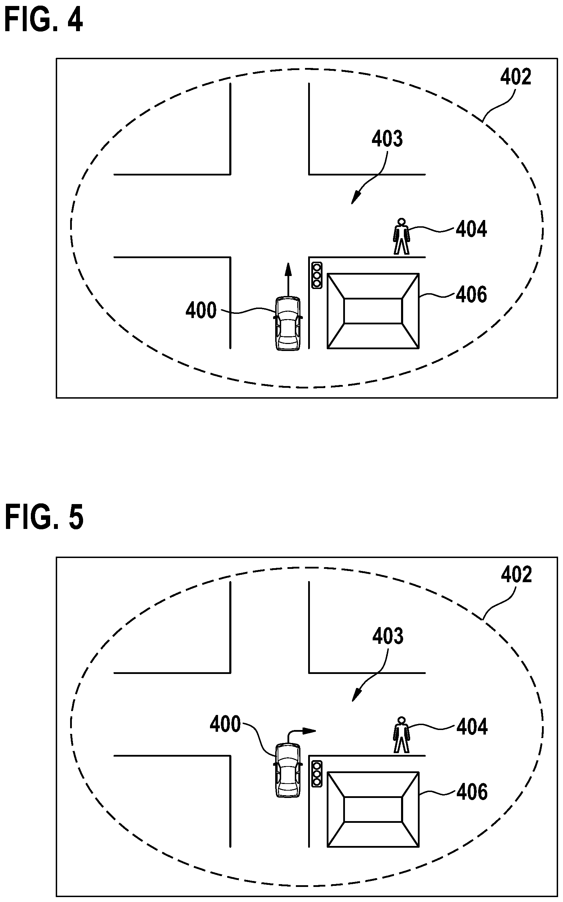

Fig. 4 zeigt eine schematische Darstellung eines kritischen Abbiegevorgangs. Gezeigt ist ein Fahrzeug 400 an einer Straßenkreuzung 402. Das Fahrzeug 400 ist im Begriff, in eine verdeckte Querstraße 403 abzubiegen, die von einem Fußgänger 404 überquert wird. Aufgrund eines Gebäudes 406 kann eine Umfeldsensorik des Fahrzeugs 400, etwa eine Kamera, nicht rechtzeitig erkennen, dass sich hinter der Kurve der Fußgänger 404 befindet. Erst nachdem das Fahrzeug 400 mit hoher Geschwindigkeit in die Querstraße 403 eingefahren ist, detektiert die Umfeldsensorik des Fahrzeugs 400 den in der Querstraße 403 befindlichen Fußgänger 404 und leitet eine Notbremsung ein. Dies ist in Fig. 5 dargestellt.

Fig. 5 zeigt eine schematische Darstellung eines kritischen Abbiegevorgangs aus Fig. 4.

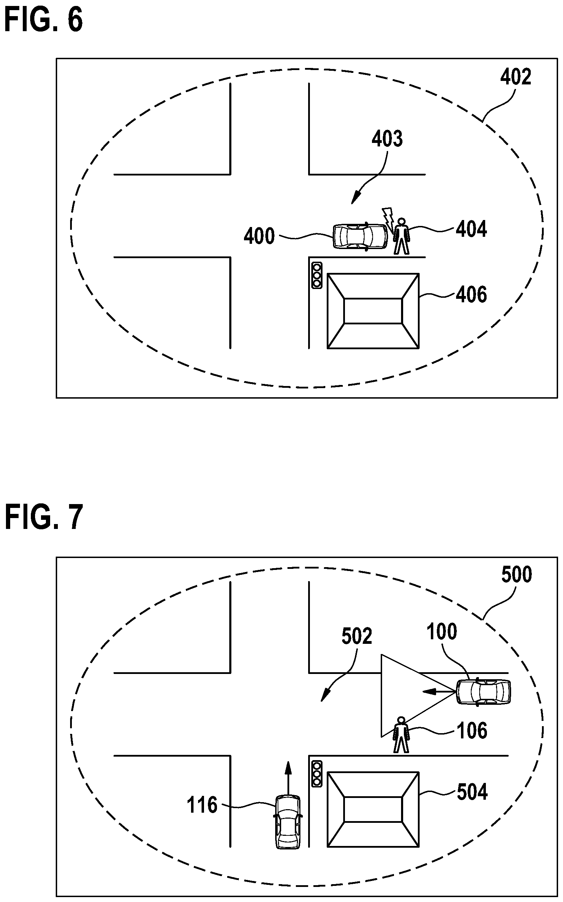

Da das Fahrzeug 400 den Fußgänger 404 erst beim Befahren der Querstraße 403 erkennt, erfolgt die Notbremsung zu spät und es kommt zu einem Unfall zwischen dem Fahrzeug 400 und dem Fußgänger 404. Dies ist in Fig. 6 dargestellt.

Fig. 6 zeigt eine schematische Darstellung eines kritischen Abbiegevorgangs aus Fig. 4.

Derartigen kritischen Szenarien ist gemein, dass Fußgänger von der Umfeldsensorik eines Fahrzeugs zu spät oder gar nicht erfasst werden. Daraus abgeleitete Gegenmaßnahmen werden vom Fahrzeug erst spät umgesetzt, sodass es zu schweren Unfällen kommen kann. An dieser Stelle greift der hier vorgestellte Ansatz zur kooperativen Ortung von Fußgängern mittels mehrerer Fahrzeuge.

Fig. 7 zeigt eine schematische Darstellung eines kritischen Abbiegevorgangs mit einem Fahrzeug 100 und einem weiteren Fahrzeug 116 aus Fig. 1. Die beiden Fahrzeuge 100, 116 und der Fußgänger 106 befinden sich an einer Straßenkreuzung 500, wobei sich das Fahrzeug 100 und der Fußgänger 106 in einer Querstraße 502 befinden. Das weitere Fahrzeug 116 ist im Begriff, in die Querstraße 502 abzubiegen, wobei die Sicht auf den Fußgänger 106 durch ein Gebäude 504 verdeckt ist. Die Fahrzeuge 100, 116 befinden sich jeweils in einem Mindestabstand zu dem Fußgänger 106 und tauschen über eine Car-to-Car-Kommunikationsschnittstelle Positionsdaten, Relativgeschwindigkeiten und/oder Daten über einen voraussichtlichen Kollisionszeitpunkt bezüglich des erkannten Fußgängers 106 aus. Die Positionen des Fußgängers 106 relativ zum Fahrzeug 100 können innerhalb des Fahrzeugs 100 selbst berechnet werden.

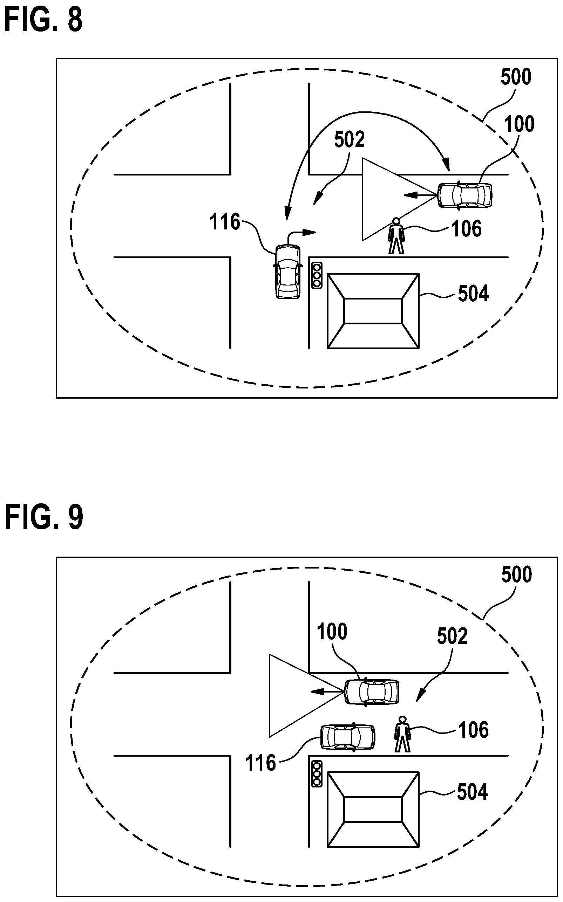

Hierbei wird der Fußgänger 106 zunächst durch den Umfeldsensor des Fahrzeugs 100 erkannt. In einem nächsten Schritt sendet das Fahrzeug 100 die berechneten Fußgängerdaten über die Kommunikationsschnittstelle an das weitere Fahrzeug 116. Die Fußgängerdaten werden vom weiteren Fahrzeug 116 empfangen und entsprechend verarbeitet, noch bevor das Fahrzeug 116 in die Kreuzung einfährt. Dies ist in Fig. 8 dargestellt.

Fig. 8 zeigt eine schematische Darstellung eines kritischen Abbiegevorgangs aus Fig. 7.

Da das weitere Fahrzeug 116 den Fußgänger 106 über Car-to-Car-Kommunikation rechtzeitig erkannt hat, kann das weitere Fahrzeug 116 rechtzeitig eine Notbremsung einleiten, sodass ein Unfall mit dem Fußgänger 106 vermieden werden kann. Dies ist in Fig. 9 dargestellt.

Fig. 9 zeigt eine schematische Darstellung eines kritischen Abbiegevorgangs aus Fig. 7.

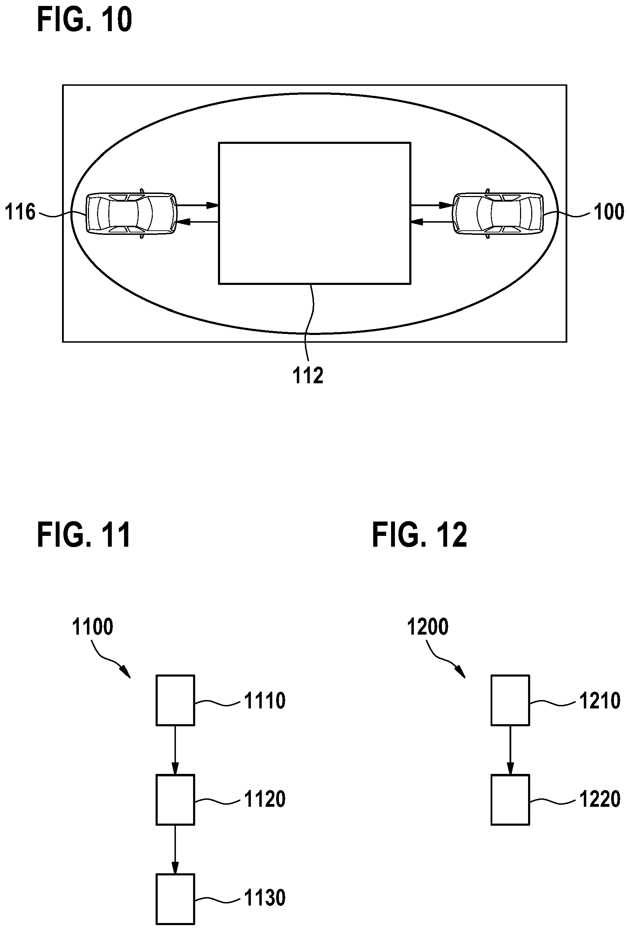

Fig. 10 zeigt eine schematische Darstellung einer Kommunikationsschnittstelle 112 gemäß einem Ausführungsbeispiel. Bei der Kommunikationsschnittstelle 112 kann es sich um eine vorangehend anhand der Figuren 1 bis 9 beschriebene Kommunikationsschnittstelle handeln. Je nach Ausführungsbeispiel erfolgt der Datenaustausch zwischen den Fahrzeugen über Funkverbindungen wie beispielsweise NFC, WLAN, Mobilfunk oder über eine Cloud durch Car-to-Infrastructure-Kommunikation. Wichtig ist dabei, dass die Funksignale oder Positionsdaten mit ausreichend hoher Geschwindigkeit übertragen werden, da der Abstand zwischen Fahrzeug und Fußgänger mitunter sehr gering sein kann.

Nachfolgend sind verschiedene Daten aufgelistet, die sich zum Austausch im Rahmen der Kommunikation zwischen den Fahrzeugen eignen:
- GPS-, Glonas-, Baidu- oder Galileo-Koordinaten des Fußgängers
- Relativgeschwindigkeit des Fußgängers
- TTI des Fußgängers
- Funksignal mit Zeitstempel
- Signalstärke des Funksignals
- Parameter für die Kommunikationsgüte der Kommunikationsschnittstelle
- Fußgängeridentifikationsnummer
- Fahrzeug-ID

Die GPS-, Glonas-, Baidu- oder Galileo-Koordinaten, die Relativgeschwindigkeit und die TTI des Fußgängers, die vom Fahrzeug 100 als Fußgängerinformation bereitgestellt werden, können vom weiteren Fahrzeug 116 verwendet werden, um eine Relativposition, eine Relativgeschwindigkeit oder eine TTI des Fußgängers bezüglich des weiteren Fahrzeugs 116 direkt zu berechnen, sofern im Vorfeld die Fahrzeugposition des weiteren Fahrzeugs 116 ebenfalls mit einer hohen Güte im entsprechenden GPS-, Glonas-, Baidu- oder Galileo-System bestimmt wurde.

Außerdem können Parameter für die Kommunikationsgüte ausgetauscht werden, um beispielsweise defekte Funksignale rechtzeitig zu erkennen und entsprechende Gegenmaßnahmen im Fahrzeug einzuleiten. Denkbar ist außerdem eine fahrzeuginterne Vergabe von Fußgänger-IDs für interne Berechnungen, etwa für die Fußgängerdarstellung.

Durch eine derartige Früherkennung von Fußgängern kann eine Trajektorienplanung in teil- oder hochautomatisierten Fahrzeugen deutlich verbessert werden. In nicht autonomen Fahrzeugen kann beispielsweise das Umfeld des Fahrzeugs mit den darin georteten Fußgängern über ein geeignetes Anzeigegerät, etwa ein Head-up-Display, für den Fahrer sichtbar dargestellt werden. Der Fahrer kann daraufhin die Fahrzeuggeschwindigkeit rechtzeitig drosseln oder ein Ausweichmanöver einleiten.

Fig. 11 zeigt ein Ablaufdiagramm eines Verfahrens 1100 gemäß einem Ausführungsbeispiel. Das Verfahren 1100 zum Bereitstellen einer Information bezüglich eines Fußgängers kann beispielsweise im Zusammenhang mit einem Steuergerät, wie es vorangehend anhand von Fig. 2 beschrieben ist, durchgeführt werden. Hierbei wird in einem Schritt 1110 das Umfeldsensorsignal eingelesen. In einem weiteren Schritt 1120 wird die Fußgängerinformation unter Verwendung des Umfeldsensorsignals erzeugt. Schließlich wird in einem Schritt 1130 die Fußgängerinformation dem weiteren Fahrzeug durch Senden der Fußgängerinformation über die Kommunikationsschnittstelle bereitgestellt.

Fig. 12 zeigt ein Ablaufdiagramm eines Verfahrens 1200 gemäß einem Ausführungsbeispiel. Das Verfahren 1200 zum Steuern eines Fahrzeugs kann beispielsweise von einem Steuergerät, wie es vorangehend anhand von Fig. 3 beschrieben ist, durchgeführt werden. Das Verfahren 1200 umfasst einen Schritt 1210, in dem die Fußgängerinformation über die Kommunikationsschnittstelle zu dem weiteren Fahrzeug eingelesen wird. In einem weiteren Schritt 1220 wird unter Verwendung der Fußgängerinformation das Steuersignal zum Steuern des Fahrzeugs erzeugt, etwa um eine Trajektorie, eine Geschwindigkeit oder zumindest einen Schwellenwert zum Auslösen einer Personenschutzeinrichtung des Fahrzeugs zu ändern.

Nachfolgend werden Ausführungsbeispiele der vorliegenden Erfindung nochmals mit anderen Worten zusammengefasst.

Im Schritt 1110 erfolgt die Detektion eines Fußgängers um ein Fahrzeug herum mithilfe der im Fahrzeug verbauten Umfeldsensoren. Wurde der Fußgänger von den Umfeldsensoren des Fahrzeugs erkannt, so wird im Schritt 1120 eine Position des Fußgängers relativ zum Fahrzeug innerhalb eines geeigneten Algorithmus geschätzt. Diese geschätzte Fußgängerposition wird auf eine absolute Position des Fahrzeugs, etwa anhand von GPS-, Glonas-, Baidu- oder Galileo-Daten, gerechnet. Als Ergebnis wird eine absolute Position des Fußgängers ermittelt. Zudem kann im Schritt 1120 eine Relativgeschwindigkeit oder ein voraussichtlicher Kollisionszeitpunkt, auch TTI genannt, für den Fußgänger basierend auf den Umfeldsensordaten berechnet werden. Die berechneten Daten können innerhalb des Fahrzeugs für einen vorausschauenden Fußgängerschutz weiterverwendet werden, beispielsweise für die Berechnung einer Vollbremsung oder für die Anpassung von Schwellen in einem Fußgängerschutzalgorithmus. Schließlich werden im Schritt 1130 die Fußgängerdaten, vorangehend auch Fußgängerinformation genannt, an alle weiteren Fahrzeuge innerhalb eines bestimmten Mindestabstands über die Car-to-Car-Kommunikationsschnittstelle gesendet. Der Mindestabstand ist beispielsweise von einer Car-to-Car-Kommunikationsgüte abhängig. Die Fußgängerdaten werden von den weiteren Fahrzeugen empfangen, wodurch diese wissen, wo sich der vom Fahrzeug erkannte Fußgänger befindet und wie er sich bewegt.

Die Fußgängerdaten werden von den innerhalb des Mindestabstands befindlichen weiteren Fahrzeugen verwendet, um beispielsweise eine Vollbremsung zu berechnen, falls eine Kollision mit dem Fußgänger unmittelbar bevorsteht, auch wenn die weiteren Fahrzeuge keine eigenen Umfeldsensoren besitzen oder der Fußgänger nicht von den in den weiteren Fahrzeugen verbauten Umfeldsensoren erkannt wurde.

Gemäß einem weiteren Ausführungsbeispiel wird im Schritt 1220 das Steuersignal erzeugt, um eine Schwellenanpassung in einem Fußgängerschutzalgorithmus durchzuführen, falls eine Kollision mit dem Fußgänger unmittelbar bevorsteht.

Zusätzlich oder alternativ wird in einem optionalen Schritt unter Verwendung der Fußgängerdaten eine Plausibilisierung für einen bereits erkannten Fußgänger durchgeführt. Hierbei wurde bereits ein Fußgänger von den Umfeldsensoren des empfangenden Fahrzeugs erkannt. Es erfolgt nun ein Vergleich dieser Umfeldsensordaten mit den Fußgängerdaten, die über Car-to-Car-Kommunikation für diesen Fußgänger empfangen wurden. Dadurch kann die Robustheit und Genauigkeit der Fußgängererkennung verbessert werden. Beispielsweise wird hierbei ein Mittelwert oder ein Median der im Fahrzeug berechneten Fußgängerposition, -relativgeschwindigkeit oder -kollisionszeit mit den über die Car-to-Car-Kommunikationsschnittstelle empfangenen Fußgängerdaten gebildet. Robuster wird die Fußgängererkennung, wenn der Fußgänger vom Fahrzeug selbst nicht erkannt wurde, jedoch vom Fahrzeug, das die Fußgängerdaten über die Kommunikationsschnittstelle sendet, erkannt wurde.

Gemäß einem weiteren Ausführungsbeispiel wird das Steuersignal im Schritt 1220 erzeugt, um eine Fahrzeugtrajektorie vorausschauend an ein Verhalten des Fußgängers oder an dessen Bewegung relativ zum Fahrzeug anzupassen. Auf diese Weise werden Kollisionen, die von der Umfeldsensorik des eigenen Fahrzeugs nicht erkannt oder vermieden werden können, zuverlässig vorhergesagt und vermieden.

In einem optionalen Schritt wird ein erkannter Fußgänger innerhalb des empfangenden Fahrzeugs über eine geeignete Mensch-Maschine-Schnittstelle angezeigt, etwa über ein Head-up-Display.

Zusätzlich oder alternativ wird die Information über einen erkannten Fußgänger innerhalb des empfangenden Fahrzeugs verwendet, um Algorithmusschwellen für den aktiven Fußgängerschutz in die robuste oder sensible Richtung zu verändern.
Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (1100) zum Bereitstellen einer Information (110) bezüglich eines Fußgängers (106) in einem Umfeld eines Fahrzeugs (100), wobei das Verfahren (1100) folgende Schritte umfasst:
Einlesen (1110) eines Umfeldsensorsignals (108), das ein von einem Umfeldsensor (104) des Fahrzeugs (100) erzeugtes Signal repräsentiert;
Erzeugen (1120) einer den Fußgänger (106) repräsentierenden Fußgängerinformation (110) unter Verwendung des Umfeldsensorsignals (108); und
Senden (1130) der Fußgängerinformation (110) an eine Kommunikationsschnittstelle (112) zu zumindest einem weiteren Fahrzeug (116), um die Fußgängerinformation (110) dem weiteren Fahrzeug (116) bereitzustellen, wobei ferner eine das Fahrzeug (100) repräsentierende Fahrzeugidentifikationsinformation (118) und/oder eine Signalinformation (120), die einen Zeitstempel und/oder eine
Signalstärke und/oder eine Signalgüte eines Sendesignals zum Senden der Fußgängerinformation (110) repräsentiert, an die Kommunikationsschnittstelle (112) gesendet wird.

2. Verfahren (1100) gemäß Anspruch 1, bei dem im Schritt des Erzeugens (1120) eine eine relative Position des Fußgängers (106) relativ zum Fahrzeug (100) und/oder eine absolute Position des Fußgängers (106) und/oder eine Relativgeschwindigkeit des Fußgängers (106) relativ zum Fahrzeug (100) und/oder einen Kollisionszeitpunkt einer Kollision zwischen dem Fußgänger (106) und dem Fahrzeug (100) repräsentierende Information als die Fußgängerinformation (110) erzeugt wird.

3. Verfahren (1100) gemäß einem der vorangegangenen Ansprüche, bei dem im Schritt des Einlesens (1110) ferner eine
Abstandsinformation (245), die einen Abstand zwischen dem Fahrzeug (100) und dem weiteren Fahrzeug (116), eingelesen wird, wobei im Schritt des Sendens (1130) die Fußgängerinformation (110) unter Verwendung der Abstandsinformation (245) gesendet wird.

4. Verfahren (1100) gemäß Anspruch 3, mit einem Schritt des Ermittelns der Abstandsinformation (245) in Abhängigkeit von einer der Kommunikationsschnittstelle (112) zugeordneten Kommunikationsgüte.

5. Verfahren (1200) zum Steuern eines Fahrzeugs (116) unter Verwendung einer von zumindest einem weiteren Fahrzeug (100) bereitgestellten Information (110) bezüglich eines Fußgängers (106) in einem Umfeld des weiteren Fahrzeugs (100), wobei das Verfahren (1200) folgende Schritte umfasst:
Einlesen (1210) einer den Fußgänger (106) repräsentierenden Fußgängerinformation (110) über eine
Kommunikationsschnittstelle (112) zu dem weiteren Fahrzeug (100); und
Erzeugen (1220) eines Steuersignals (122) zum Steuern des Fahrzeugs (116) unter Verwendung der Fußgängerinformation (110), wobei das Steuersignal (122) erzeugt wird, um eine Trajektorie und/oder eine Geschwindigkeit des Fahrzeugs (116) und/oder zumindest einen Schwellenwert zum Aktivieren einer Personenschutzeinrichtung des Fahrzeugs (116) zu ändern.

6. Verfahren (1200) gemäß Anspruch 5, bei dem im Schritt des Einlesens (1210) ferner ein von einem Umfeldsensor (124) des Fahrzeugs (116) erzeugtes Umfeldsensorsignal (126) eingelesen wird, wobei in einem Schritt des Plausibilisierens das
Umfeldsensorsignal (126) unter Verwendung der Fußgängerinformation (110) plausibilisiert wird, um ein plausibilisiertes Umfeldsensorsignal (335) zu erhalten, wobei im Schritt des Erzeugens (1220) das Steuersignal (122) unter Verwendung des plausibilisierten Umfeldsensorsignals (335) erzeugt wird.

7. Verfahren (1200) gemäß einem der Ansprüche5 oder 6, mit einem Schritt des Ausgebens der Fußgängerinformation (110) als Warnsignal (128).

8. Steuergerät (102, 114) mit Einheiten (210, 220, 230, 240; 310, 320, 330), die ausgebildet sind, um das Verfahren (1100) gemäß einem der Ansprüche 1 bis 4 oder das Verfahren (1200) gemäß einem der Ansprüche 65 bis 7 auszuführen und/oder anzusteuern.

9. Computerprogramm, das ausgebildet ist, um das Verfahren (1100) gemäß einem der Ansprüche 1 bis 4 oder das Verfahren (1200) gemäß einem der Ansprüche 5 bis 7auszuführen und/oder anzusteuern.

10. Maschinenlesbares Speichermedium, auf dem das Computerprogramm nach Anspruch 9 gespeichert ist.

## Claims

1. Method (1100) for providing information (110) regarding a pedestrian (106) in an environment of a vehicle (100), wherein the method (1100) comprises the following steps:
reading in (1110) an environment sensor signal (108) representing a signal generated by an environment sensor (104) of the vehicle (100);
producing (1120) pedestrian information (110) representing the pedestrian (106) by using the environment sensor signal (108); and
sending (1130) the pedestrian information (110) to a communication interface (112) for at least one further vehicle (116) in order to provide the pedestrian information (110) to the further vehicle (116), wherein, furthermore, vehicle identification information (118) representing the vehicle (100) and/or signal information (120) representing a timestamp and/or a signal strength and/or a signal quality of a transmitted signal for sending the pedestrian information (110) is sent to the communication interface (112).

2. Method (1100) according to Claim 1, in which the producing step (1120) involves information that represents a relative position of the pedestrian (106) relative to the vehicle (100) and/or an absolute position of the pedestrian (106) and/or a relative speed of the pedestrian (106) relative to the vehicle (100) and/or a collision time of a collision between the pedestrian (106) and the vehicle (100) being produced as the pedestrian information (110).

3. Method (1100) according to either of the preceding claims, in which the reading-in step (1110) furthermore involves distance information (245) that a distance between the vehicle (100) and the further vehicle (116) being read in, wherein the sending step (1130) involves the pedestrian information (110) being sent using the distance information (245).

4. Method (1100) according to Claim 3, having a step of ascertaining the distance information (245) on the basis of a communication quality associated with the communication interface (112).

5. Method (1200) for controlling a vehicle (116) by using information (110) provided by at least one further vehicle (100) regarding a pedestrian (106) in an environment of the further vehicle (100), wherein the method (1200) comprises the following steps:
reading in (1210) pedestrian information (110) representing the pedestrian (106) via a communication interface (112) for the further vehicle (100); and
generating (1220) a control signal (122) for controlling the vehicle (116) by using the pedestrian information (110), wherein the control signal (122) is generated in order to change a trajectory and/or a speed of the vehicle (116) and/or at least one threshold value for activating a person protection device of the vehicle (116).

6. Method (1200) according to Claim 5, in which the reading-in step (1210) furthermore involves an environment sensor signal (126) generated by an environment sensor (124) of the vehicle (116) being read in, wherein a step of plausibilizing the environment sensor signal (126) by using the pedestrian information (110) is plausibilized in order to obtain a plausibilized environment sensor signal (335), wherein the generating step (1220) involves the control signal (122) being generated by using the plausibilized environment sensor signal (335).

7. Method (1200) according to either of Claims 5 and 6, having a step of outputting the pedestrian information (110) as a warning signal (128).

8. Control unit (102, 114) having units (210, 220, 230, 240; 310, 320, 330) that are designed to carry out and/or control the method (1100) according to one of Claims 1 to 4 or the method (1200) according to one of Claims 65 to 7.

9. Computer program designed to carry out and/or control the method (1100) according to one of Claims 1 to 4 or the method (1200) according to one of Claims 5 to 7.

10. Machine-readable storage medium on which the computer program according to Claim 9 is stored.

## Revendications

1. Procédé (1100) de fourniture d'une information (110) concernant un piéton (106) dans un environnement d'un véhicule (100), le procédé (1100) comprenant les étapes suivantes :
la lecture (1110) d'un signal de capteur d'environnement (108) qui représente un signal généré par un capteur d'environnement (104) du véhicule (100) ;
la génération (1120) d'une information de piéton (110) représentant le piéton (106) en utilisant le signal de capteur d'environnement (108) ; et
l'envoi (1130) de l'information de piéton (110) à une interface de communication (112) avec au moins un véhicule supplémentaire (116) afin de fournir l'information de piéton (110) au véhicule supplémentaire (116), une information d'identification de véhicule (118) représentant le véhicule (100) et/ou une information de signal (120), qui représente une estampille temporelle et/ou une intensité de signal et/ou une qualité de signal d'un signal d'émission servant à l'envoi de l'information de piéton (110), étant en outre envoyée à l'interface de communication (112).

2. Procédé (1100) selon la revendication 1, avec lequel une information qui représente une position relative du piéton (106) par rapport au véhicule (100) et/ou une position absolue du piéton (106) et/ou une vitesse relative du piéton (106) par rapport au véhicule (100) et/ou un instant de collision d'une collision entre le piéton (106) et le véhicule (100) est générée en tant qu'information de piéton (110) à l'étape de génération (1120) .

3. Procédé (1100) selon l'une des revendications précédentes, avec lequel une information de distance (245), laquelle une distance entre le véhicule (100) et le véhicule supplémentaire (116), est en outre lue à l'étape de lecture (1110), l'information de piéton (110) étant envoyée à l'étape d'envoi (1130) en utilisant l'information de distance (245).

4. Procédé (1100) selon la revendication 3, comprenant une étape de détermination de l'information de distance (245) en fonction d'une qualité de communication associée à l'interface de communication (112).

5. Procédé (1200) de commande d'un véhicule (116) en utilisant une information (110) fournie par au moins un véhicule supplémentaire (100) concernant un piéton (106) dans un environnement du véhicule supplémentaire (100), le procédé (1200) comprenant les étapes suivantes :
la lecture (1210) d'une information de piéton (110) représentant le piéton (106) par le biais d'une interface de communication (112) avec le véhicule supplémentaire (100) ; et
la génération (1220) d'un signal de commande (122) destiné à commander le véhicule (116) en utilisant l'information de piéton (110), le signal de commande (122) étant généré pour modifier une trajectoire et/ou une vitesse du véhicule (116) et/ou au moins une valeur de seuil destinée à activer un dispositif de protection des personnes du véhicule (116).

6. Procédé (1200) selon la revendication 5, avec lequel un signal de capteur d'environnement (126) généré par un capteur d'environnement (124) du véhicule (116) est en plus lu à l'étape de lecture (1210), la plausibilité du signal de capteur d'environnement (126) étant plausibilisée à une étape de vérification de plausibilité en utilisant l'information de piéton (110) afin d'obtenir un signal de capteur d'environnement plausible (335), le signal de commande (122) étant généré à l'étape de génération (1220) en utilisant le signal de capteur d'environnement plausible (335).

7. Procédé (1200) selon l'une des revendications 5 et 6, comprenant une étape de délivrance de l'information de piéton (110) sous la forme d'un signal d'alerte (128).

8. Contrôleur (102, 114) comprenant des unités (210, 220, 230, 240 ; 310, 320, 330) qui sont configurées pour mettre en œuvre et/ou commander le procédé (1100) selon l'une des revendications 1 à 4 ou le procédé (1200) selon l'une des revendications 65 à 7.

9. Programme informatique qui est configuré pour mettre en œuvre et/ou commander le procédé (1100) selon l'une des revendications 1 à 4 ou le procédé (1200) selon l'une des revendications 5 à 7.

10. Support d'enregistrement lisible par machine, sur lequel est enregistré le programme informatique selon la revendication 9.
